# EUROPÄISCHE PATENTANMELDUNG

(11) **EP 3 273 751 A1**
(43) Veröffentlichungstag der Anmeldung: **24.01.2018**
(21) Anmeldenummer: 17182121.8
(22) Anmeldetag: 19.07.2017
(51) Int. Cl.: H05B 6/12, H05B 3/74

(54) **KOCHFELDPLATTE**

(30) Priorität: 21.07.2016 ES 201630994
(71) Anmelder: BSH Hausgeräte GmbH, 81739 München (DE)
(72) Erfinder: Llorente Gil, Sergio, 50009 Zaragoza (ES); Martinez Solanas, Elena, 50015 Zaragoza (ES); Rivera Peman, Julio, 50410 Cuarte de Huerva (Zaragoza) (ES); Urrutia Angos, David, 50009 Zaragoza (ES)

(57) **Zusammenfassung**

Die Erfindung geht aus von einer Kochfeldplatte (10a-b), welche zu einem Aufstellen wenigstens eines Gargeschirrs (12a-b) vorgesehen ist, mit zumindest einer Grundplatte (14a-b) und mit zumindest einer Schichteinheit (16a-b), welche auf zumindest einem Oberflächenteilbereich (18a-b) der Grundplatte (14a-b) angeordnet ist.

Um eine gattungsgemäße Vorrichtung mit verbesserten Eigenschaften hinsichtlich eines Bedienkomforts bereitzustellen, wird vorgeschlagen, dass die Schichteinheit (16a-b) dazu vorgesehen ist, ein Übertreten zumindest einer Flüssigkeit von einem ersten räumlichen Bereich (20a-b) in einen zweiten räumlichen Bereich (22a-b) wenigstens im Wesentlichen zu verhindern.

## Beschreibung

Die Erfindung betrifft eine Kochfeldplatte nach dem Oberbegriff des Patentanspruchs 1 und ein Verfahren mit einer Kochfeldplatte nach dem Patentanspruch 11.

Aus der ES 24 39 632 A2 ist bereits eine Kochfeldplatte mit einer Grundplatte und mit einer Schichteinheit bekannt. Die Schichteinheit ist auf einem Oberflächenteilbereich der Grundplatte angeordnet. Ein räumlicher Bereich, welcher den Oberflächenteilbereich der Grundplatte umfasst, ist als ein Bedienbereich ausgebildet, in welchem eine Bedienerschnittstelle angeordnet ist. Die Schichteinheit ist in einer Einbaulage oberhalb der Bedienerschnittstelle angeordnet und dazu vorgesehen, eine Sichtbarkeit von Fingerabdrücken zu verringern. Die Schichteinheit ist jedoch nicht dazu vorgesehen, ein Übertreten einer Flüssigkeit von einem ersten räumlichen Bereich in einen zweiten räumlichen Bereich im Wesentlichen zu verhindern.

Die Aufgabe der Erfindung besteht insbesondere darin, eine gattungsgemäße Vorrichtung mit verbesserten Eigenschaften hinsichtlich eines Bedienkomforts bereitzustellen. Die Aufgabe wird erfindungsgemäß durch die Merkmale der Patentansprüche 1 und 11 gelöst, während vorteilhafte Ausgestaltungen und Weiterbildungen der Erfindung den Unteransprüchen entnommen werden können.

Die Erfindung geht aus von einer Kochfeldplatte, welche zu einem Aufstellen wenigstens eines Gargeschirrs vorgesehen ist, mit zumindest einer Grundplatte und mit zumindest einer Schichteinheit, welche auf zumindest einem Oberflächenteilbereich der Grundplatte angeordnet ist.

Es wird vorgeschlagen, dass die Schichteinheit dazu vorgesehen ist, ein Übertreten zumindest einer Flüssigkeit von einem ersten räumlichen Bereich in einen zweiten räumlichen Bereich wenigstens im Wesentlichen zu verhindern. Unter einer "Kochfeldplatte" soll insbesondere eine Einheit verstanden werden, die in wenigstens einem Betriebszustand zu einem Aufstellen von Gargeschirr vorgesehen ist und die insbesondere dazu vorgesehen ist, einen Teil eines Kochfeldaußengehäuses, insbesondere eines die Kochfeldplatte aufweisenden Kochfelds, auszubilden. Unter einer "Grundplatte" soll insbesondere eine wenigstens im Wesentlichen plattenartige Einheit verstanden werden, welche insbesondere wenigstens zu einem Großteil aus Glas und/oder Glaskeramik besteht und welche insbesondere zumindest eine Flächenerstreckung aufweist, die bei einer Betrachtung in einer Draufsicht wenigstens im Wesentlichen identisch mit einer Flächenerstreckung der Kochfeldplatte ist. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden. Die Grundplatte weist insbesondere zumindest eine Längserstreckung und zumindest eine Quererstreckung auf, welche insbesondere wesentlich größer sind als eine Dicke der Grundplatte. Insbesondere sind die Längserstreckung der Grundplatte und die Quererstreckung der Grundplatte jeweils mindestens 5-mal, insbesondere mindestens 10-mal, vorteilhaft mindestens 20-mal, besonders vorteilhaft mindestens 50-mal, vorzugsweise mindestens 100-mal und besonders bevorzugt mindestens 150-mal so groß wie die Dicke der Grundplatte. Unter einer "Dicke" eines Objekts soll insbesondere eine Erstreckung verstanden werden, welche senkrecht zu einer Längserstreckung des Objekts und zu einer Quererstreckung des Objekts ausgerichtet ist. Unter einer "Längserstreckung" eines Objekts soll insbesondere Erstreckung des Objekts entlang einer Längserstreckungsrichtung des Objekts verstanden werden. Unter einer "Längserstreckungsrichtung" eines Objekts soll insbesondere eine Richtung verstanden werden, welche parallel zu einer längsten Seite eines kleinsten gedachten geometrischen Quaders ausgerichtet ist, welcher das Objekt gerade noch vollständig umschließt. Unter einer "Erstreckung" eines Objekts soll insbesondere ein maximaler Abstand zweier Punkte einer senkrechten Projektion des Objekts auf eine Ebene verstanden werden. Unter einer "Quererstreckung" eines Objekts soll insbesondere Erstreckung des Objekts entlang einer Quererstreckungsrichtung des Objekts verstanden werden. Unter einer "Quererstreckungsrichtung" eines Objekts soll insbesondere eine Richtung verstanden werden, welche parallel zu einer zweitlängsten Seite eines kleinsten gedachten geometrischen Quaders ausgerichtet ist, welcher das Objekt gerade noch vollständig umschließt. Unter einer "Schichteinheit" soll insbesondere eine Einheit verstanden werden, welche zumindest eine Schicht aufweist. Insbesondere ist die Schichteinheit von der Grundplatte verschieden ausgebildet. Die Schichteinheit weist insbesondere eine Dicke von mindestens 1×10⁻¹¹ m, insbesondere von mindestens 1×10⁻¹⁰ m, vorteilhaft von mindestens 5×10⁻¹⁰ m und vorzugsweise von mindestens 1×10⁻⁹ m auf. Die Schichteinheit weist insbesondere eine Dicke von maximal 1×10⁻⁵ m, insbesondere von maximal 1×10⁻⁶ m, vorteilhaft von maximal 5×10⁻⁷ m und vorzugsweise von maximal 1×10⁻⁷ m auf. Beispielsweise könnte die Schicht durch ein Beschichtungsverfahren, insbesondere durch ein Siebdruckverfahren, durch spin-coating, durch Tauchlackieren (dip-coating), durch ein Sol-Gel-Verfahren, durch Aufsprühen, durch ein Tintenstrahldruckverfahren, durch ein chemisches Gasabscheidungsverfahren (CVD: Chemival Vapor Deposition) und/oder durch ein physikalisches Gasabscheidungsverfahren (PVD: Physical Vapor Deposition), auf den Oberflächenteilbereich der Grundplatte aufgebracht sein. Unter einem "Oberflächenteilbereich" der Grundplatte soll insbesondere ein Teilbereich einer Oberfläche der Grundplatte verstanden werden, welche auf einer Seite der Grundplatte angeordnet ist. Beispielsweise könnte der Oberflächenteilbereich der Grundplatte in einer Einbaulage auf einer Seitenwand der Grundplatte und/oder auf einer Unterseite der Grundplatte angeordnet sein. Vorteilhaft ist der Oberflächenteilbereich der Grundplatte in einer Einbaulage auf einer Oberseite der Grundplatte angeordnet, welche insbesondere einem Bediener zugewandt ist. Die Grundplatte weist insbesondere den Oberflächenteilbereich auf. Unter "zumindest" einer Flüssigkeit sollen insbesondere homogene und/oder heterogene Flüssigkeiten verstanden werden. Die Flüssigkeit könnte beispielsweise Wasser und/oder Öl und/oder Fett, insbesondere flüssiges Fett, umfassen. Die Schichteinheit ist insbesondere dazu vorgesehen, ein Übertreten zumindest einer Flüssigkeit von dem ersten räumlichen Bereich in den zweiten räumlichen Bereich bei einem Flüssigkeitsaufkommen von mindestens 0,01 l/m², insbesondere von mindestens 0,05 l/m² vorteilhaft von mindestens 0,1 l/m², besonders vorteilhaft von mindestens 0,2 l/m² und vorzugsweise von mindestens 0,3 l/m² zu verhindern. Die Schichteinheit ist insbesondere dazu vorgesehen, ein Übertreten zumindest einer Flüssigkeit von dem ersten räumlichen Bereich in den zweiten räumlichen Bereich bei einem Flüssigkeitsaufkommen von maximal 3 l/m², insbesondere von maximal 2,5 l/m²,vorteilhaft von maximal 2 l/m², besonders vorteilhaft von maximal 1,75 l/m² und vorzugsweise von maximal 1,5 l/m² zu verhindern. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere ein hoher Bedienkomfort erreicht werden. Insbesondere kann eine optimierte Reinigbarkeit ermöglicht werden. Insbesondere kann ein Reinigungsaufwand für einen Bediener auf den ersten räumlichen Bereich begrenzt werden, wodurch insbesondere größere Reinigungsarbeiten, welche insbesondere durch in dem zweiten räumlichen Bereich übertretende Flüssigkeit verursacht sein könnten, vermieden werden können. Bei öffentlichen Ereignissen, wie beispielsweise bei Messen und/oder bei Veranstaltungen, kann insbesondere ein überraschender Effekt demonstriert werden, welcher insbesondere in einer Stauung von Flüssigkeit in dem ersten räumlichen Bereich bestehen könnte.

Ferner wird vorgeschlagen, dass der erste räumliche Bereich zumindest einen weiteren Oberflächenteilbereich der Grundplatte umfasst. Die Grundplatte weist insbesondere den weiteren Oberflächenteilbereich auf. Dadurch kann insbesondere ein räumlich begrenzter und/oder überschaubarer Reinigungsaufwand ermöglicht werden, welcher insbesondere auf Bereiche beschränkt werden kann, die Oberflächenteilbereiche der Grundplatte umfassen.

Der zweite räumliche Bereich könnte beispielsweise einen zusätzlichen Oberflächenteilbereich der Grundplatte umfassen, welcher insbesondere von dem Oberflächenteilbereich der Grundplatte und vorteilhaft von dem weiteren Oberflächenteilbereich der Grundplatte verschieden sein könnte. Vorzugsweise umfasst der zweite räumliche Bereich zumindest einen Umgebungsbereich der Grundplatte. Unter einem "Umgebungsbereich" der Grundplatte soll insbesondere ein Bereich verstanden werden, welcher frei von Material der Grundplatte ist. Der Umgebungsbereich der Grundplatte könnte beispielsweise eine Arbeitsplatte, insbesondere eine Küchenarbeitsplatte und/oder einen Boden, insbesondere einen Fußboden, und/oder eine Abstellfläche umfassen. Insbesondere könnte der zweite räumliche Bereich den ersten räumlichen Bereich bei Betrachtung in einer Draufsicht bezüglich zumindest eines geometrischen Schwerpunkts und/oder Mittelpunkts des ersten räumlichen Bereichs wenigstens im Wesentlichen umgeben, insbesondere über einen Winkelbereich von mindestens 180°, insbesondere von mindestens 270°, vorteilhaft von mindestens 330° und vorzugsweise von mindestens 350°. Dadurch können insbesondere großräumige Reinigungsaktionen vermieden werden.

Weiterhin wird vorgeschlagen, dass der zweite räumliche Bereich zumindest eine Ausnehmung in der Grundplatte umfasst. Die Ausnehmung in der Grundplatte ist insbesondere ein Loch in der Grundplatte, welches bei einer Betrachtung der Grundplatte in einer Draufsicht insbesondere von der Grundplatte definiert und/oder begrenzt ist und an welches insbesondere zumindest ein Oberflächenteilbereich der Grundplatte angrenzt. Beispielsweise könnte die Ausnehmung in der Grundplatte als eine Abzugsausnehmung ausgebildet sein, durch welche in wenigstens einem Betriebszustand insbesondere in dem Betriebszustand entstehende Dämpfe abtransportiert werden könnten. In einer Einbaulage könnte unterhalb der Grundplatte insbesondere zumindest eine Abzugseinheit mit zumindest einer Gebläseeinheit angeordnet sein, welche in wenigstens einem Betriebszustand insbesondere in dem Betriebszustand entstehende Dämpfe durch die Ausnehmung in der Grundplatte abtransportieren könnte. Insbesondere könnte der erste räumliche Bereich den zweiten räumlichen Bereich bei Betrachtung in einer Draufsicht bezüglich zumindest eines geometrischen Schwerpunkts und/oder Mittelpunkts des zweiten räumlichen Bereichs wenigstens im Wesentlichen umgeben, insbesondere über einen Winkelbereich von mindestens 180°, insbesondere von mindestens 270°, vorteilhaft von mindestens 330° und vorzugsweise von mindestens 350°. Dadurch kann insbesondere eine Verschmutzung und/oder ein Defekt von Kochfeldeinheiten, wie beispielsweise einer Kochfeldelektronik und/oder einer Abzugseinheit und/oder einer Gebläseeinheit, vermieden werden, welche in einer Einbaulage insbesondere unterhalb der Ausnehmung angeordnet sein könnten.

Ferner wird vorgeschlagen, dass die Schichteinheit zumindest eine hydrophobe Schicht aufweist. Unter einer "hydrophoben" Schicht soll insbesondere eine wasserabweisende Schicht verstanden werden, die zumindest eine Oberfläche aufweist, die dazu vorgesehen ist, auf der Oberfläche aufgebrachtes Wasser abzuweisen. Insbesondere ist die hydrophobe Schicht dazu vorgesehen, eine Bindung mit Wasser zu vermeiden. Vorzugsweise bildet die hydrophobe Schicht mit einem Wassertropfen einen Kontaktwinkel von mehr als 90°, insbesondere von mehr als 100°, vorteilhaft von mehr als 120° und vorzugsweise von mehr als 150° aus. Unter einem "Kontaktwinkel" soll insbesondere ein Winkel verstanden werden, den eine Tangente an einen Kontaktpunkt eines Wassertropfens mit einer Oberfläche eines Feststoffs bei einer Betrachtung in einer Querschnittsebene senkrecht zu der Oberfläche des Festkörpers und ausgehend von einem Punkt innerhalb einer Kontaktfläche des Wassertropfens mit der Oberfläche des Feststoffs zu der Oberfläche ausbildet. Beispielsweise könnte die hydrophobe Schicht wenigstens zu einem Großteil aus Hexamethyldisilazan (HMDSN), Hexamethyldisiloxan (HMDSO), Methyltrichlormethylsilan (TMMOS) und/oder Titandioxid (TiO₂) bestehen. Alternativ oder zusätzlich könnte die hydrophobe Schicht wenigstens zu einem Großteil aus einem Material bestehen, welches unter dem Markennamen ECC7000 von 3M und/oder unter dem Markennamen F8815 von Evonik erhältlich ist. Beispielsweise könnte die Schichteinheit ausschließlich hydrophobe Schichten aufweisen. Alternativ könnte die Schichteinheit insbesondere zusätzlich zu der hydrophoben Schicht zumindest eine weitere Schicht aufweisen, welche insbesondere von einer hydrophoben Schicht verschieden sein könnte. Dadurch kann insbesondere im Fall von überkochendem Wasser ein Übertreten des Wassers von dem ersten räumlichen Bereich in den zweiten räumlichen Bereich wenigstens im Wesentlichen vermieden werden.

Zudem wird vorgeschlagen, dass die Schichteinheit zumindest eine wenigstens teilweise oleophobe Schicht aufweist. Die Schichteinheit könnte beispielsweise alternativ oder zusätzlich zumindest eine wenigstens teilweise lipophobe Schicht aufweisen. Unter einer "oleophoben" Schicht soll insbesondere eine ölabweisende Schicht verstanden werden, die zumindest eine Oberfläche aufweist, die dazu vorgesehen ist, auf der Oberfläche aufgebrachtes Öl abzuweisen. Insbesondere ist die oleophobe Schicht dazu vorgesehen, eine Bindung mit Öl zu vermeiden. Vorzugsweise bildet die oleophobe Schicht mit einem Öltropfen einen Kontaktwinkel von mehr als 90°, insbesondere von mehr als 100°, vorteilhaft von mehr als 120° und vorzugsweise von mehr als 150° aus. Unter einer "lipophoben" Schicht soll insbesondere eine fettabweisende Schicht verstanden werden, die zumindest eine Oberfläche aufweist, die dazu vorgesehen ist, auf der Oberfläche aufgebrachtes Fett abzuweisen. Insbesondere ist die lipophobe Schicht dazu vorgesehen, eine Bindung mit Fett zu vermeiden. Vorzugsweise bildet die lipophobe Schicht mit einem Fetttropfen einen Kontaktwinkel von mehr als 90°, insbesondere von mehr als 100°, vorteilhaft von mehr als 120° und vorzugsweise von mehr als 150° aus. Beispielsweise könnte die oleophobe Schicht und/oder die lipophobe Schicht wenigstens zu einem Großteil aus Hexamethyldisilazan (HMDSN), Hexamethyldisiloxan (HMDSO), Methyltrichlormethylsilan (TMMOS), Titandioxid (TiO₂) und/oder Perfluoroctansäure (PFOA) bestehen. Alternativ oder zusätzlich könnte die oleophobe Schicht und/oder die lipophobe Schicht wenigstens zu einem Großteil aus einem Material bestehen, welches unter dem Markennamen ECC7000 von 3M und/oder unter dem Markennamen F8815 von Evonik erhältlich ist. Beispielsweise könnte die Schichteinheit ausschließlich oleophobe Schichten aufweisen. Alternativ könnte die Schichteinheit insbesondere zusätzlich zu der oleophoben Schicht zumindest eine weitere Schicht aufweisen, welche insbesondere von einer oleophoben Schicht verschieden sein könnte. Beispielsweise könnte die Schichteinheit ausschließlich lipophobe Schichten aufweisen. Alternativ könnte die Schichteinheit insbesondere zusätzlich zu der lipophoben Schicht zumindest eine weitere Schicht aufweisen, welche insbesondere von einer lipophoben Schicht verschieden sein könnte. Dadurch kann insbesondere eine durch Fette, Öle und/oder Fingerabdrücke verursachte Verschmutzung der Oberfläche vermieden werden, wodurch insbesondere eine einfache Reinigung ermöglicht und/oder ein hoher Komfort für einen Bediener erreicht werden kann.

Die Schichteinheit könnte insbesondere zumindest zwei Schichten, insbesondere die hydrophobe Schicht und die lipophobe Schicht und/oder die oleophobe Schicht, aufweisen, welche insbesondere zueinander benachbart und vorteilhaft aneinander angrenzend angeordnet und gemeinsam dazu vorgesehen sein könnten, ein Übertreten zumindest einer Flüssigkeit von einem ersten räumlichen Bereich in einen zweiten räumlichen Bereich wenigstens im Wesentlichen zu verhindern. Dadurch kann insbesondere eine hohe Gestaltungsfreiheit hinsichtlich einer Materialauswahl für die Schichten erreicht werden. Alternativ könnte die Schichteinheit insbesondere genau eine Schicht aufweisen, welche insbesondere hydrophobe und oleophobe und/oder lipophobe Eigenschaften aufweisen und dazu vorgesehen sein könnte, ein Übertreten zumindest einer Flüssigkeit von einem ersten räumlichen Bereich in einen zweiten räumlichen Bereich wenigstens im Wesentlichen zu verhindern, wodurch insbesondere ein geringer Platzbedarf für das Schichtsystem erreicht werden kann.

Die Schichteinheit könnte beispielsweise wenigstens im Wesentlichen opak, insbesondere undurchsichtig, ausgebildet sein. Beispielsweise könnte die Schichteinheit zu einer Dekoration und/oder zu einer Übermittlung von Informationen an einen Bediener vorgesehen sein, wodurch die Schichteinheit insbesondere mehrere Funktionen erfüllen könnte. Vorzugsweise ist die Schichteinheit wenigstens im Wesentlichen transparent ausgebildet. Die Schichteinheit ist insbesondere dazu vorgesehen, einen Anteil von mindestens 60 %, insbesondere von mindestens 70 %, vorteilhaft von mindestens 80 %, besonders vorteilhaft von mindestens 90 % und vorzugsweise von mindestens 95 % auf zumindest einer ersten Oberfläche der Schichteinheit auftreffendem sichtbarem Licht zu transmittieren und insbesondere an zumindest eine zweite Oberfläche der Schichteinheit, welche der ersten Oberfläche der Schichteinheit insbesondere gegenüberliegt, zu transportieren. Dadurch kann insbesondere ein unauffälliges Schichtsystem bereitgestellt und/oder ein hoher Komfort für einen Bediener erreicht werden.

Ferner wird vorgeschlagen, dass die Schichteinheit in wenigstens einem montierten Zustand zumindest den ersten räumlichen Bereich wenigstens im Wesentlichen umgibt, und insbesondere zusätzlich begrenzt. Die Schichteinheit umgibt den ersten räumlichen Bereich bei Betrachtung in einer Draufsicht bezüglich zumindest eines geometrischen Schwerpunkts und/oder Mittelpunkts des ersten räumlichen Bereichs insbesondere über einen Winkelbereich von mindestens 180°, insbesondere von mindestens 270°, vorteilhaft von mindestens 330° und vorzugsweise von mindestens 350°. Dadurch kann die Flüssigkeit insbesondere optimal auf den ersten räumlichen Bereich begrenzt und vorteilhaft ein Übertreten in den zweiten räumlichen Bereich über einen gesamten Umfang des ersten räumlichen Bereichs begrenzt werden.

Zudem wird vorgeschlagen, dass die Schichteinheit in wenigstens einem montierten Zustand zumindest den zweiten räumlichen Bereich wenigstens im Wesentlichen umgibt, und insbesondere zusätzlich begrenzt. Die Schichteinheit umgibt den zweiten räumlichen Bereich bei Betrachtung in einer Draufsicht bezüglich zumindest eines geometrischen Schwerpunkts und/oder Mittelpunkts des zweiten räumlichen Bereichs insbesondere über einen Winkelbereich von mindestens 180°, insbesondere von mindestens 270°, vorteilhaft von mindestens 330° und vorzugsweise von mindestens 350°. Bei einer Betrachtung in einer Draufsicht könnte der erste räumliche Bereich insbesondere zwischen zwei Teilbereichen der Schichteinheit angeordnet sein. Vorteilhaft könnte die Schichteinheit bei einer Betrachtung in einer Draufsicht eine innere und eine äußere Begrenzung des ersten räumlichen Bereichs ausbilden. Dadurch kann der zweite räumliche Bereich insbesondere gegen ein Eintreten und/oder Übertreten von Flüssigkeit aus dem ersten räumlichen Bereich abgeschottet werden, wodurch insbesondere eine Verschmutzung des zweiten räumlichen Bereichs und/oder von in dem zweiten räumlichen Bereich angeordneter Objekte vermieden werden kann.

Eine besonders optimierte Reinigbarkeit, welche insbesondere einen geringen Reinigungsaufwand nach sich zieht, kann insbesondere erreicht werden durch ein Kochfeld, insbesondere durch ein Induktionskochfeld, mit zumindest einer erfindungsgemäßen Kochfeldplatte.

Eine Reinigbarkeit, welche insbesondere einen geringen Reinigungsaufwand nach sich zieht, kann insbesondere weiter gesteigert werden durch ein Verfahren mit einer erfindungsgemäßen Kochfeldplatte, welche zu einem Aufstellen wenigstens eines Gargeschirrs vorgesehen ist, mit zumindest einer Grundplatte und mit zumindest einer Schichteinheit, welche auf zumindest einem Oberflächenteilbereich der Grundplatte angeordnet ist, wobei durch die Schichteinheit ein Übertreten zumindest einer Flüssigkeit von einem ersten räumlichen Bereich in einen zweiten räumlichen Bereich wenigstens im Wesentlichen verhindert wird.

Die Kochfeldplatte soll hierbei nicht auf die oben beschriebene Anwendung und Ausführungsform beschränkt sein. Insbesondere kann die Kochfeldplatte zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Kochfeld mit einer Kochfeldplatte in einer schematischen Draufsicht,
- Fig. 2: einen schematischen Schnitt entlang der Linie II-II in Fig. 1,
- Fig. 3: ein Kochfeld mit einer alternativen Kochfeldplatte in einer schematischen Draufsicht und
- Fig. 4: einen schematischen Schnitt entlang der Linie IV-IV in Fig. 3.

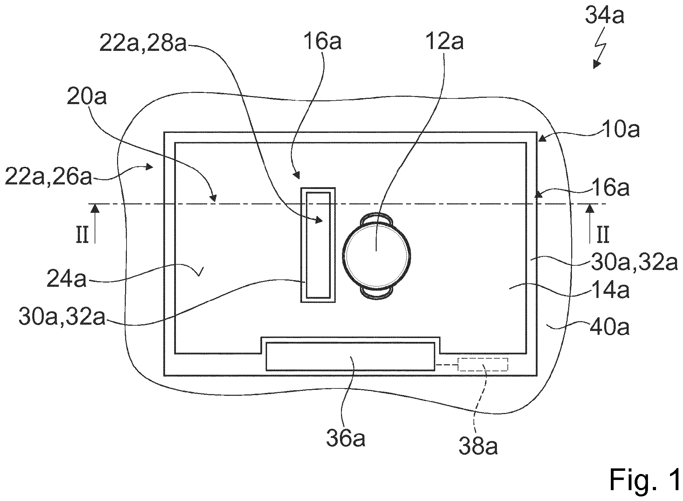

Fig. 1 zeigt ein Kochfeld 34a, das als ein Induktionskochfeld ausgebildet ist. Das Kochfeld 34a ist zu einer Beheizung von Gargeschirr 12a vorgesehen.

Das Kochfeld 34a weist eine Bedienerschnittstelle 36a zu einer Eingabe und/oder Auswahl von Betriebsparametern auf, beispielsweise einer Heizleistung und/oder einer Heizleistungsdichte und/oder einer Heizzone. Die Bedienerschnittstelle 36a ist zu einer Ausgabe eines Werts eines Betriebsparameters an einen Bediener vorgesehen.

Das Kochfeld 34a weist eine Steuereinheit 38a auf. Die Steuereinheit 38a ist dazu vorgesehen, in Abhängigkeit von mittels der Bedienerschnittstelle 36a eingegebener Betriebsparameter Aktionen auszuführen und/oder Einstellungen zu verändern. Die Steuereinheit 38a regelt in einem Heizbetriebszustand eine Energiezufuhr zu Heizelementen (nicht dargestellt).

Das Kochfeld 34a weist mehrere Heizelemente auf. Beispielsweise könnten die Heizelemente in Form einer Matrix angeordnet sein. Die Heizelemente könnten insbesondere Teil zumindest eines variablen Kochflächenbereichs sein. Alternativ könnten die Heizelemente insbesondere Teil eines klassischen Kochfelds sein, bei welchem insbesondere durch eine Position der Heizelemente definierte, fest vorgegebene Heizzonen existieren könnten, welche insbesondere auf einer Kochfeldplatte markiert sein könnten.

Die Heizelemente sind dazu vorgesehen, auf einer Kochfeldplatte 10a oberhalb der Heizelemente aufgestelltes Gargeschirr 12a zu erhitzen. Die Heizelemente sind als Induktionsheizeinheiten ausgebildet. In einer Einbaulage sind die Heizelemente in einer Vertikalrichtung unterhalb einer Kochfeldplatte 10a angeordnet.

Das Kochfeld 34a weist die Kochfeldplatte 10a auf. Die Kochfeldplatte 10a ist zu einem Aufstellen von Gargeschirr 12a zu einer Beheizung vorgesehen. In einem montierten Zustand bildet die Kochfeldplatte 10a einen Teil eines Kochfeldaußengehäuses aus.

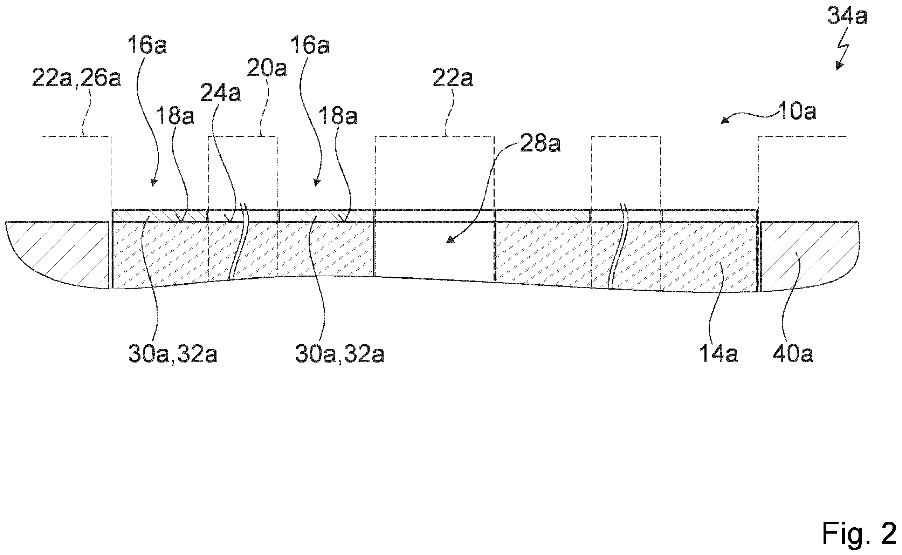

Die Kochfeldplatte 10a weist eine Grundplatte 14a auf (vgl. Fig. 2). Die Grundplatte 14a erstreckt sich bei Betrachtung in einer Draufsicht im Wesentlichen über eine gesamte Flächenerstreckung der Kochfeldplatte 10a.

Die Kochfeldplatte 10a weist eine Schichteinheit 16a auf (vgl. Fig. 2). Im vorliegenden Ausführungsbeispiel ist die Schichteinheit 16a in einem montierten Zustand im Wesentlichen vollständig auf der Grundplatte 14a angeordnet. Die Schichteinheit 16a ist in einem montierten Zustand auf einem Oberflächenteilbereich 18a der Grundplatte 14a angeordnet.

In einem Betriebszustand verhindert die Schichteinheit 16a ein Übertreten zumindest einer Flüssigkeit von einem ersten räumlichen Bereich 20a in einen zweiten räumlichen Bereich 22a im Wesentlichen. In einem Betriebszustand verhindert die Schichteinheit 16a ein Übertreten von Öl und Wasser von einem ersten räumlichen Bereich 20a in einen zweiten räumlichen Bereich 22a im Wesentlichen. Die Schichteinheit 16a ist in einem montierten Zustand zwischen dem ersten räumlichen Bereich 20a und dem zweiten räumlichen Bereich 22a angeordnet. Die Schichteinheit 16a grenzt in einem montierten Zustand den ersten räumlichen Bereich 20a und den zweiten räumlichen Bereich 22a gegeneinander ab.

Der erste räumliche Bereich 20a umfasst einen weiteren Oberflächenteilbereich 24a der Grundplatte 14a. Der weitere Oberflächenteilbereich 24a der Grundplatte 14a ist zu einem Aufstellen von Gargeschirr 12a zu einer Beheizung vorgesehen. In einem Betriebszustand ist in dem ersten räumlichen Bereich 20a und insbesondere auf dem weiteren Oberflächenteilbereich 24a Gargeschirr 12a aufgestellt.

Der zweite räumliche Bereich 22a umfasst einen Umgebungsbereich 26a der Grundplatte 14a. In dem Umgebungsbereich 26a der Grundplatte 14a ist eine Arbeitsplatte 40a angeordnet. Die Arbeitsplatte 40a ist als eine Küchenarbeitsplatte ausgebildet.

Die Grundplatte 14a definiert eine Ausnehmung 28a. Die Ausnehmung 28a ist im Wesentlichen mittig in der Grundplatte 14a angeordnet. Der zweite räumliche Bereich 22a umfasst die Ausnehmung 28a in der Grundplatte 14a.

Im vorliegenden Ausführungsbeispiel ist die Schichteinheit 16a mehrteilig ausgebildet. Die Schichteinheit 16a weist zumindest zwei Teilbereiche auf. Im vorliegenden Ausführungsbeispiel weist die Schichteinheit 16a genau zwei Teilbereiche auf. Alternativ könnte die Schichteinheit eine größere Anzahl an Teilbereichen aufweisen oder einteilig ausgebildet sein. Im Folgenden wird lediglich ein Teilbereich der Schichteinheit 16a beschrieben.

Die Schichteinheit 16a weist eine hydrophobe Schicht 30a auf. Die Schichteinheit 16a weist eine oleophobe Schicht 32a auf. Beispielsweise könnten die hydrophobe Schicht 30a und die oleophobe Schicht 32a nebeneinander, insbesondere aneinander angrenzend, angeordnet sein. Im vorliegenden Ausführungsbeispiel sind die hydrophobe Schicht 30a und die oleophobe Schicht 32a identisch. Die Schichteinheit 16a weist, insbesondere genau, eine Schicht 30a, 32a auf, welche sowohl hydrophobe als auch oleophobe Eigenschaften aufweist.

Im vorliegenden Ausführungsbeispiel ist in einer Einbaulage unterhalb des Oberflächenteilbereichs 18a der Grundplatte 14a, auf welchem insbesondere die Schichteinheit 16a angeordnet ist, die Bedienerschnittstelle 36a angeordnet. Die Schichteinheit 16a ist im Wesentlichen transparent ausgebildet, um insbesondere eine Sichtbarkeit der Bedienerschnittstelle 36a und/oder eine optimale Bedienung des Kochfelds 34a mittels der Bedienerschnittstelle 36a zu ermöglichen.

In einem montierten Zustand umgibt die Schichteinheit 16a den ersten räumlichen Bereich 20a im Wesentlichen. Bei Betrachtung in einer Draufsicht ist die Schichteinheit 16a in einem montierten Zustand in einem äußeren Randbereich der Grundplatte 14a angeordnet. Bei Betrachtung in einer Draufsicht ist die Schichteinheit 16a in einem montierten Zustand im Wesentlichen entlang eines Umfangs der Grundplatte 14a angeordnet.

In einem montierten Zustand umgibt die Schichteinheit 16a den zweiten räumlichen Bereich 22a im Wesentlichen. Bei Betrachtung in einer Draufsicht ist die Schichteinheit 16a in einem montierten Zustand in einem inneren Randbereich der Grundplatte 14a angeordnet, welcher die Ausnehmung 28a in der Grundplatte 14a begrenzt. Bei Betrachtung in einer Draufsicht ist die Schichteinheit 16a in einem montierten Zustand im Wesentlichen entlang eines Umfangs der Ausnehmung 28a in der Grundplatte 14a angeordnet.

Im vorliegenden Ausführungsbeispiel ist die Schichteinheit 16a in einem montierten Zustand direkt auf dem Oberflächenteilbereich 18a der Grundplatte 14a angeordnet.

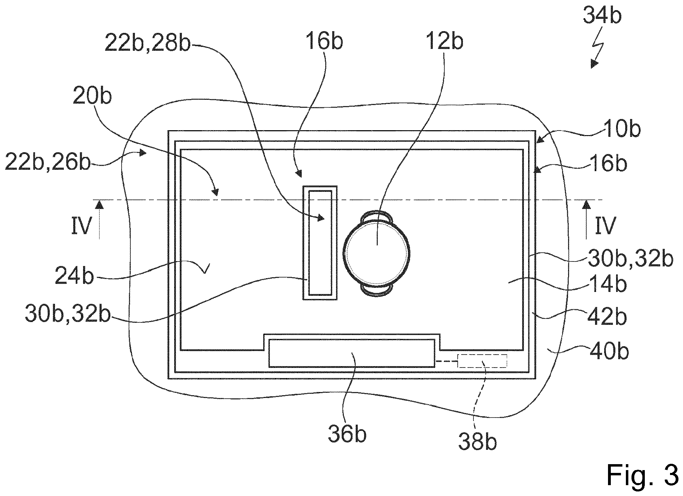

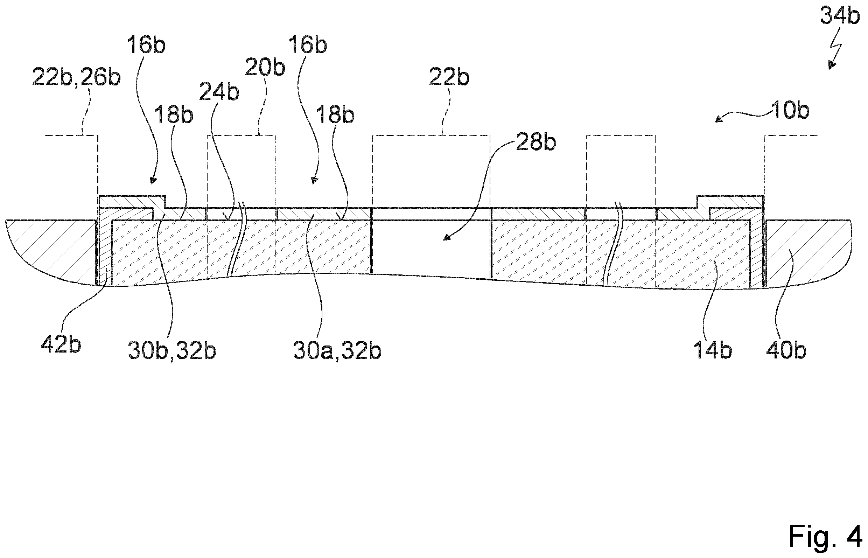

In Fig. 3 und 4 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 2 verwiesen werden kann. Zur Unterscheidung der Ausführungsbeispiele ist der Buchstabe a in den Bezugszeichen des Ausführungsbeispiels in den Fig. 1 bis 2 durch den Buchstaben b in den Bezugszeichen des Ausführungsbeispiels der Fig. 3 und 4 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 2 verwiesen werden.

Fig. 3 zeigt ein Kochfeld 34b, das als ein Induktionskochfeld ausgebildet ist. Das Kochfeld 34b weist eine Kochfeldplatte 10b auf. Die Kochfeldplatte 10b weist einen Kochfeldrahmen 42b auf. Beispielsweise könnte der Kochfeldrahmen 42b wenigstens zu einem Großteil aus zumindest einem Metall bestehen.

In einem montierten Zustand umgibt, insbesondere umschließt, der Kochfeldrahmen 42b eine Grundplatte 14b der Kochfeldplatte 10b im Wesentlichen. Bei Betrachtung in einer Draufsicht ist der Kochfeldrahmen 42b in einem montierten Zustand im Wesentlichen entlang eines äußeren Umfangs der Grundplatte 14b angeordnet.

Im vorliegenden Ausführungsbeispiel ist eine Schichteinheit 16b der Kochfeldplatte 10b in einem montierten Zustand teilweise direkt auf einem Oberflächenteilbereich 18b der Grundplatte 14b angeordnet (vgl. Fig. 4). In einem montierten Zustand ist die Schichteinheit 16b teilweise direkt auf dem Kochfeldrahmen 42b angeordnet. Der Kochfeldrahmen 42b ist in einem montierten Zustand auf dem Oberflächenteilbereich 18b der Grundplatte 14b angeordnet.

Durch eine derartige Ausgestaltung kann insbesondere eine Funktion, ein Übertreten zumindest einer Flüssigkeit von einem ersten räumlichen Bereich 20b in einen zweiten räumlichen Bereich 22b wenigstens im Wesentlichen zu verhindern, verstärkt werden.

### Bezugszeichen

- 10: Kochfeldplatte
- 12: Gargeschirr
- 14: Grundplatte
- 16: Schichteinheit
- 18: Oberflächenteilbereich
- 20: Erster räumlicher Bereich
- 22: Zweiter räumlicher Bereich
- 24: Weiterer Oberflächenteilbereich
- 26: Umgebungsbereich
- 28: Ausnehmung
- 30: Hydrophobe Schicht
- 32: Oleophobe Schicht
- 34: Kochfeld
- 36: Bedienerschnittstelle
- 38: Steuereinheit
- 40: Arbeitsplatte
- 42: Kochfeldrahmen

## Patentansprüche

1. Kochfeldplatte (10a-b), welche zu einem Aufstellen wenigstens eines Gargeschirrs (12a-b) vorgesehen ist, mit zumindest einer Grundplatte (14a-b) und mit zumindest einer Schichteinheit (16a-b), welche auf zumindest einem Oberflächenteilbereich (18a-b) der Grundplatte (14a-b) angeordnet ist, **dadurch gekennzeichnet, dass** die Schichteinheit (16a-b) dazu vorgesehen ist, ein Übertreten zumindest einer Flüssigkeit von einem ersten räumlichen Bereich (20a-b) in einen zweiten räumlichen Bereich (22a-b) wenigstens im Wesentlichen zu verhindern.

2. Kochfeldplatte (10a-b) nach Anspruch 1, **dadurch gekennzeichnet, dass** der erste räumliche Bereich (20a-b) zumindest einen weiteren Oberflächenteilbereich (24ab) der Grundplatte (14a-b) umfasst.

3. Kochfeldplatte (10a-b) nach einem der vorhergehenden Ansprüche, **dadurch gekennzeichnet, dass** der zweite räumliche Bereich (22a-b) zumindest einen Umgebungsbereich (26a-b) der Grundplatte (14a-b) umfasst.

4. Kochfeldplatte (10a-b) nach einem der vorhergehenden Ansprüche, **dadurch gekennzeichnet, dass** der zweite räumliche Bereich (22a-b) zumindest eine Ausnehmung (28a-b) in der Grundplatte (14a-b) umfasst.

5. Kochfeldplatte (10a-b) nach einem der vorhergehenden Ansprüche, **dadurch gekennzeichnet, dass** die Schichteinheit (16a-b) zumindest eine hydrophobe Schicht (30a-b) aufweist.

6. Kochfeldplatte (10a-b) nach einem der vorhergehenden Ansprüche, **dadurch gekennzeichnet, dass** die Schichteinheit (16a-b) zumindest eine oleophobe Schicht (32a-b) aufweist.

7. Kochfeldplatte (10a-b) nach einem der vorhergehenden Ansprüche, **dadurch gekennzeichnet, dass** die Schichteinheit (16a-b) wenigstens im Wesentlichen transparent ausgebildet ist.

8. Kochfeldplatte (10a-b) nach einem der vorhergehenden Ansprüche, **dadurch gekennzeichnet, dass** die Schichteinheit (16a-b) in wenigstens einem montierten Zustand zumindest den ersten räumlichen Bereich (20a-b) wenigstens im Wesentlichen umgibt.

9. Kochfeldplatte (10a-b) nach einem der vorhergehenden Ansprüche, **dadurch gekennzeichnet, dass** die Schichteinheit (16a-b) in wenigstens einem montierten Zustand den zweiten räumlichen Bereich (22a-b) wenigstens im Wesentlichen umgibt.

10. Kochfeld mit zumindest einer Kochfeldplatte (10a-b) nach einem der vorhergehenden Ansprüche.

11. Verfahren mit einer Kochfeldplatte (10a-b), insbesondere nach einem der Ansprüche 1 bis 9, welche zu einem Aufstellen wenigstens eines Gargeschirrs (12a-b) vorgesehen ist, mit zumindest einer Grundplatte (14a-b) und mit zumindest einer Schichteinheit (16a-b), welche auf zumindest einem Oberflächenteilbereich (18a-b) der Grundplatte (14a-b) angeordnet ist, wobei durch die Schichteinheit (16a-b) ein Übertreten zumindest einer Flüssigkeit von einem ersten räumlichen Bereich (20a-b) in einen zweiten räumlichen Bereich (22a-b) wenigstens im Wesentlichen verhindert wird.
